(19)

Europäisches
Patentamt
European
Patent Office
Office européen
des brevets

(11) **EP 2 530 865 A1**

(12) **EUROPEAN PATENT APPLICATION**

(43) Date of publication:
**05.12.2012 Bulletin 2012/49**

(51) Int Cl.:
*H04L 1/20* [(2006.01)]    *H04L 27/36* [(2006.01)]

(21) Application number: **11305666.7**

(22) Date of filing: **31.05.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Wild, Thorsten**<br>**70435 Stuttgart (DE)**<br><br>(74) Representative: **2SPL Patentanwälte**<br>**Postfach 15 17 23**<br>**80050 München (DE)** |
| (71) Applicant: **Alcatel Lucent**<br>**75007 Paris (FR)** | |

(54) **Concept for Mitigating Impairments due to Transmit Noise**

(57)     Embodiments relate to a concept for mitigating impairments due to transmit noise. Provided is a transmitter apparatus (10) comprising an extractor (11) adapted to extract information (12) indicative of the transmit noise of a physical transmit signal (13), wherein the transmit noise denotes a deviation of the physical transmit signal (13) from an ideal transmit signal (14), and a transmitter (15; 16; 17) adapted to transmit the extracted information (12) to a receiver apparatus (40) associated to the transmitter apparatus (10) for further processing said information (12) at the receiver apparatus (40).

Fig. 1

## Description

Embodiments of the present invention generally relate to wireless communications and, more specifically, to a concept for mitigating impairments due to transmit noise.

Background

Wireless networks are steadily growing and more and more systems for mobile communication are deployed. For example, multiple generations of cellular systems have been developed and introduced to the mass markets. While 2nd generation cellular communication systems, like e.g. GSM (Global System for Mobile Communications), have been mainly introduced to meet traditional demands for circuit switched voice communications with comparatively low data rates, 3rd and 4th generation mobile communication systems, like e.g. UMTS (Universal Mobile Telecommunication System) and LTE (Long-Term Evolution), have been and still are being standardized to meet the ever increasing demands for higher and higher data rates needed for packet based mobile communications.

Besides increasing the order of employed modulation schemes, one other important approach to meet high data rate requirements are so-called Multiple-Input Multiple-Output (MIMO) antenna techniques, which can significantly increase the data rates by exploiting spatial multiplexing and/or achieve additional diversity gains by applying space-time coding. Advanced receiver signal processing algorithms are, on the one hand, very powerful in that they potentially allow performances closer and closer to physical limits. However, such signal processing algorithms are designed under certain idealized assumptions that are not always fulfilled in real-world communication systems. Instead, as has e.g. been described in C. Studer, M. Wenk, and A. Burg, "MIMO transmission with residual transmit-RF impairments," in Proceedings of the International ITGWorkshop on Smart Antennas (WSA '10), pp. 189-196, February 2010, physical implementations of radio frequency (RF) transmitters suffer from a number of impairments that degrade the quality of the received signal beyond the impact of fading or thermal-noise at the receiver. Most prominent non-idealities are carrier-frequency and sampling-rate offset, phase-noise, IQ-imbalance, and amplifier nonlinearities. In the sequel, the combination of all those impairments at a transmitter will be referred to as transmit noise (Tx noise). The transmit noise may be interpreted as a deviation of a physical, i.e. real-world RF transmit signal from an ideal transmit signal constellation due to the aforementioned transmitter non-idealities.

The impact of Tx noise may be at least partially compensated at the transmitter by means of calibration or pre-distortion, or at the receiver using sophisticated compensation algorithms. However, for practical scenarios, a certain amount of distortion typically remains unaccounted for. The reasons for the presence of such residual transmit-RF (Tx-RF, RF = Radio Frequency) impairments are, e.g., parameter estimation errors in compensation algorithms (e.g., caused by thermal noise at the receiver), mismatch between a physical RF-chain and the model assumed for impairment compensation, or simply the fact that the compensation algorithms for some impairments are too complex for economic implementation.

In MIMO wireless communication systems, distortions resulting from residual Tx-RF impairments that defy proper compensation appear as colored noise at the receiver, see e.g. T. Schenk, X.-J. Tao, P. Smulders, and E. Fledderus, "Influence and suppression of phase noise in multi-antenna OFDM," in Proc. IEEE VTC 2004-Fall, vol. 2, Sep. 2004, pp. 1443-1447, or H. Suzuki, T. Tran, I. Collings, G. Daniels, and M. Hedley, "Transmitter noise effect on the performance of a MIMO-OFDM hardware implementation achieving improved coverage," IEEE Journal on Sel. Areas in Comm., vol. 26, no. 6, pp. 867-876, Aug. 2008. Even with so-called Single-Input Single-Output (SISO) configurations the Tx noise seen at the receiver may be colored due to noise shaping techniques and/or effects at the transmitting side and/or the influence of a frequency selective fading channel. Thus, besides the spatial coloring, considered by Studer et. al., the coloring might appear in the dimensions of the multiple access resources: Coloring in frequency, time and/or code. This is especially of importance when the channel creates correlation between several resources used in parallel, e.g. neighbored subcarriers or orthogonal frequency division multiplexing (OFDM) symbols. Even when the Tx noise itself is uncorrelated at the transmitter, after passing the radio channel, when it is observed at the receiver, the correlation appears along the dimensions space / frequency / time / code.

Unfortunately, the presence of such colored Tx noise at the receiver is still routinely ignored in the development, in performance analysis of new transmission schemes, and in the design of corresponding receiver algorithms. Studer et al. exemplarily show for a MIMO configuration that already a small amount of uncompensated Tx noise at a receiver may severely degrade the performance of well-known and established linear and/or nonlinear detection algorithms. Examples of linear detection algorithms include the zero-forcing (ZF) or minimum mean squared error (MMSE) detection. Prominent non-linear detection algorithms include decision feedback estimation (DFE), maximum-likelihood (ML) detection and (soft-output) max-log a posteriori probability (APP). In particular, the performance of the computational expensive nonlinear detectors may heavily suffer in the presence of colored Tx noise due to a mismatch of presumed noise statistics.

Studer et al. propose to use a Tx noise whitening filter at a receiver in order to compensate performance losses due to Tx noise. Numerical results show that the suggested solution may help to combat disadvantageous effects of colored Tx noise experienced by a receiver. The problem of this solution is, however, that properties of the Tx noise (e.g. its variance) needed to compute said Tx noise whitening filter are typically unknown to the receiver.

Throughout the subsequent description matrices are set in boldface capital letters and vectors in boldface lower-case letters. We write $A_{i;j}$ for the entry in the i-th row and j-th column of **A**. The superscript $^H$ stands for conjugate transpose, $A^{-1}$ and $A^{\dagger}$ for the inverse and Moore-Penrose pseudo-inverse of the matrix **A**, respectively. $I_N$ is the N x N identity matrix. The $\ell^2$-norm of x is llxll. The expectation operator is E[.] and Pr [X] refers to the probability of the event X.

Summary

Embodiments may be based on the finding that it will usually be difficult to estimate the properties of the Tx noise at a receiver, as the receiver typically experiences a combination of interference, thermal noise, useful signal (e.g. known pilot signal), etc., and the Tx noise.

Hence, it is one finding that properties of the Tx noise may be determined (e.g. by measurement, or estimation) at the transmitter and subsequently be forwarded to the receiver, which thus obtains the required knowledge. This may avoid complex Tx noise estimation circuitry at the receiver. When choosing an appropriate format for forwarding information indicative of the Tx noise, signalling from the transmitter to the receiver may be kept arbitrarily small.

Embodiments of the present invention provide a transmitter apparatus comprising an extractor adapted to extract information indicative of a transmit noise (Tx noise) of a physical transmit signal, wherein the transmit noise denotes a deviation of the physical transmit signal from an ideal transmit signal. The transmitter apparatus further comprises a transmitter or forwarder adapted to transmit or forward the extracted information to a receiver apparatus associated to the transmitter apparatus for further processing the extracted information at the receiver apparatus.

Further, embodiments of the present invention also provide a transmit method for a communication system, the method comprising a step of extracting or determining information indicative of a transmit noise of a physical transmit signal, wherein the transmit noise denotes a deviation of the physical transmit signal from an ideal transmit signal, and a step of transmitting the extracted information to a receiver apparatus associated to the transmitter apparatus for further processing said information at the receiver apparatus.

According to some embodiments the transmitter apparatus may be comprised by a transceiver apparatus residing in or at a base station (or NodeB) of a wireless mobile communication system, wherein the base station may serve a plurality of associated mobile stations, each comprising a receiver apparatus. In such a case embodiments may improve downlink communication from a base station to an associated mobile device. Examples of wireless communication systems include the aforementioned cellular communication systems, such as GSM/EDGE, UMTS, LTE, as well as wireless networks belonging to the IEEE 802.11-family.

Of course, embodiments also relate to the contrary case, i.e., the transmitter apparatus may as well be comprised by a mobile device, wherein the receiver apparatus may be comprised by a base station transceiver. In this case characteristic Tx noise information is forwarded from the mobile device to the base station in uplink direction. Hence, embodiments may also improve uplink reception, i.e., the reception of uplink signals from a mobile device by a receiver apparatus located in or at a base station.

The transmitter apparatus' extractor may be adapted to extract statistical properties of the Tx noise as the information indicative of the Tx noise. Such statistical properties may include e.g. a Tx noise variance or an error vector magnitude (EVM) value of at least one physical transmit path from an output of a digital baseband processing unit up to a transmit antenna. The EVM (sometimes also referred to as receive constellation error or RCE) is a measure used to quantify the performance of a digital radio transmitter or receiver. A signal sent by an ideal transmitter or received by an ideal receiver would have all signal constellation points precisely at ideal locations, however various aforementioned imperfections in the implementation cause the actual, physical signal constellation points to deviate from the ideal locations. Hence, EVM may be regarded as a measure of how far the points are from their respective ideal locations due to Tx noise. For physical transmit paths producing frequency-colored Tx noise, the extracted or determined Tx noise variance or the EVM may of course be frequency dependent, e.g. due to noise shaping techniques in sigma-delta-converters. This may be accounted for by describing the frequency dependent Tx noise information values by means of a vector or a functional relationship mapping a certain frequency to a resulting statistical quantity. This statistical information can e.g. be a covariance matrix of the Tx noise, using the dimension frequency, time, space or code. E.g. for a mobile communication system transmitting on 16 parallel subcarriers, the covariance matrix is of dimension 16 x 16, containing the complex-valued scalar covariance between two subcarriers. As the structure of such a matrix is hermitian, thus identical to its conjugate transpose, redundant information for signaling this matrix can be removed by just signaling the main diagonal and the upper half of the matrix.

Of particular interest are, as mentioned above, MIMO systems due to their ability of conveying high data rates. In the MIMO case the transmitter apparatus may comprise a plurality of transmit paths, each leading to a different transmit antenna. The extractor may then be adapted to extract information indicative of Tx noise for a physical transmit signal of each of the plurality of transmit paths. I.e., the extractor may extract the Tx noise variance and/or the EVM for each transmit path, including RF circuitry, respectively. Such extracted statistical properties for each transmit path and/or correlation coefficients between individual transmit paths may be arranged in a Tx noise correlation or covariance matrix in case of a plurality of transmit antennas employed at the transmitter apparatus.

In order to obtain an estimate of an expected value of said information on the Tx noise, such as its variance or EVM, the extractor may be adapted to average instantaneous information indicative of the Tx noise, e.g. instantaneous Tx noise samples, over a predefined time period. This resembles a low-pass filtering of instantaneously measured Tx noise information values. The more time invariant the statistical properties of the Tx noise are, the longer the averaging time may be and, hence, the less Tx noise information need to be forwarded from the transmitter to the receiver apparatus. For example, instantaneous samples could be averaged by a sliding average means, which may be implemented with low computational complexity. Depending on how strong the average changes from time to time, the transmission rate of the Tx noise information may be adapted. In order to further reduce the required signaling overhead, this information could be "quasi-static", so could be signaled only once when a mobile enters a cell.

In order to limit the Tx noise information the transmitter may be adapted to quantize the extracted Tx noise information prior to its transmission towards the receiver apparatus. For the quantization a certain amount of bits dedicated to the Tx noise information may be foreseen, depending on its magnitude and/or its dynamic range. In order to reduce Tx noise signaling from the transmitter apparatus to the receiver apparatus at least one of a plurality of signal compression techniques may be employed. E.g., signaling traffic may only be generated when a Tx noise information value substantially deviates from its previously determined value. This virtually corresponds to a differential encoding. The quantization can make use of a codebook. This is especially interesting in case the Tx noise information is vector- or matrix-valued. A set of predefined matrices or vectors could be stored at both ends of the link and the actual signaling of Tx noise just is an index corresponding to the respective "best-matching" vector/matrix. The selection of this "best-matching" codebook vector/matrix can e.g. be based on the vector/matrix minimizing a distance metric (e.g. Euclidean distance, Chordal distance) to the observed vector/matrix - the observation is e.g. the measured Tx noise covariance at the transmitter. Optionally, the codebook of vectors/matrices contains normalized values and an additional scalar coefficient for scaling is signaled.

The transmitter may further be adapted to multiplex the extracted Tx noise information with other control signaling information to obtain a multiplexed control signal, which may then be mapped onto a dedicated (e.g. DCCH), common (e.g. CCCH) or onto a broadcast control channel (e.g. BCCH) of a wireless communication system and transmitted to the receiver apparatus. In case the Tx noise is essentially the same for a plurality of receiver apparatuses associated to the transmitter apparatus, it may be advantageous to use a common control, multicast or broadcast control channel, i.e., a point to multipoint, unidirectional (downlink) channel, in order to keep individual signaling traffic due to Tx noise signaling as small as possible in the wireless communication network.

Further embodiments also comprise a receiver apparatus having a receiver adapted to receive, from an associated transmitter apparatus, information indicative of a transmit noise of a (real-world) physical transmit signal, wherein the transmit noise denotes a deviation of the physical transmit signal (constellation) from an ideal transmit signal (constellation), and a detector adapted to detect, based on the received information indicative of the transmit noise, information symbols of the physical transmit signal received by the receiver apparatus. In other words, a receiver apparatus according to embodiments is the counterpart to a corresponding transmitter apparatus providing the Tx noise information to said receiver apparatus.

The receiver apparatus' detector may comprise a whitening filter for whitening the transmit noise in a frequency and/or spatial domain based on the Tx noise information received from the associated transmitter apparatus. The whitening filter thereby is a specially chosen filter so that, in response to a spectrally and/or spatially colored noise signal, the output of the whitening filter is a spectrally and/or spatially white noise signal.

Spatially colored noise is especially relevant for MIMO systems with signal correlations between different receive (Rx) paths. Embodiments, hence, also comprise receiver apparatuses, wherein the received information is indicative of transmit noise of a plurality of physical transmit signals, respectively, and wherein the plurality of physical transmit signals is transmitted to the receiver from the associated transmitter apparatus via corresponding number of transmit antennas. For a MIMO system having $M_T$ transmit and $M_R \geq M_T$ receive antennas, and independent and identically distributed (i.i.d.) circularly symmetric complex Gaussian (CSCG) distributed Tx noise vector $\mathbf{n}_t$ with variance $\sigma_t^2$ per complex-valued entry, such a Tx noise whitening filter $\mathbf{W}$ at the receiver may be denoted as

$$\mathbf{W} = \sigma_r \mathbf{K}^{-\frac{1}{2}} = \sigma_r \left( \sigma_t^2 \mathbf{H}\mathbf{H}^H + \sigma_r^2 \mathbf{I}_{M_R} \right)^{-\frac{1}{2}} , \tag{1}$$

wherein $\sigma_r^2$ denotes a Rx noise variance of an $M_R$-dimensional Rx noise vector $\mathbf{n}_r$, $\sigma_t^2$ denotes the Tx noise variance of an $M_T$-dimensional Tx noise vector $\mathbf{n}_t$, $\mathbf{H}$ denotes a $M_R$ x $M_T$ complex-valued MIMO channel matrix, $\mathbf{K}$ denotes a covariance matrix of an aggregate noise $\tilde{n} = Hn_t + n_r$ at the receiver, and $\mathbf{I}_{M_R}$ denotes the $M_R$ x $M_R$ identity matrix. Hence, when applying the whitening filter $\mathbf{W}$ to a received signal

$$\tilde{\mathbf{y}} = \mathbf{H}\mathbf{s} + \mathbf{K}^{\frac{1}{2}}\mathbf{w}, \quad \mathbf{w} \sim \mathcal{CN}(0, \mathbf{I}_{M_R}), \qquad (2)$$

the aforementioned MIMO detection algorithms initially developed for i.i.d. CSCG noise can now be applied to the filtered receive signal and the filtered channel matrix. This may dramatically improve the detection quality compared to the uncompensated case.

According to a further embodiment a receive method for a communication system is provided, the method comprising as step of receiving, from an associated transmitter apparatus, information indicative of a transmit noise of a physical transmit signal, wherein the transmit noise denotes a deviation of the physical transmit signal from an ideal transmit signal. The method also comprises a step of detecting, based on the received information indicative of the transmit noise, information symbols of the physical transmit signal received by the receiver apparatus.

Yet further embodiments also provide a communication system, the communication system comprising both a transmitter and a receiver apparatus. The transmitter apparatus comprises an extractor adapted to extract information indicative of a transmit noise of a physical transmit signal, wherein the transmit noise denotes a deviation of the physical transmit signal from an ideal transmit signal. The transmitter apparatus also comprises a transmitter adapted to forward the extracted information to a receiver apparatus associated to the transmitter apparatus for further processing said extracted information at the receiver. The receiver apparatus comprises a receiver adapted to receive, from the associated transmitter apparatus, the information indicative of the transmit noise, and a processor or detector adapted to detect, based on the received information indicative of the transmit noise, information symbols of the physical transmit signal received by the receiver apparatus.

Some embodiments comprise digital control circuits installed within the transmitter apparatus' and/or the receiver apparatus' electrical circuitry. Such a digital control circuit, e.g. a digital signal processor (DSP), needs to be programmed accordingly. Hence, yet further embodiments also provide a computer program having a program code for performing at least a step of embodiments of the aforementioned methods, when the computer program is executed on a computer or a digital processor.

Embodiments may practicably enable the possibility of proper Tx impairment compensation at a receiver device. By signaling Tx noise statistics from a transmitter to the receiver device, the difficult and inaccurate task of estimating such Tx noise properties at the receive side may be avoided, thus improving the receiver and, hence, also the overall system performance. Studer et al. predict a > 5dB gain at a frame error rate of 10%, when the Tx noise variance is perfectly known at the receiver, which may be realized by embodiments of the present invention.

Brief description of the Figures

Some embodiments of apparatuses and/or methods will be described in the following by way of example only, and with reference to the accompanying figures, in which

Fig. 1 shows a schematic block diagram of a transmitter apparatus according to an embodiment;

Fig. 2 shows a schematic block diagram of an EVM measurement at a transmitter apparatus according to an embodiment;

Fig. 3 shows a more detailed block diagram of steps of a transmit method performed at a transmitter apparatus according to an embodiment;

Fig. 4 shows a schematic block diagram of a receiver apparatus according to an embodiment; and

Fig. 5 shows a more detailed block diagram of steps of a receive method performed at a receiver apparatus according to an embodiment.

Description of Embodiments

Various example embodiments will now be described more fully with reference to the accompanying drawings in which some example embodiments are illustrated. In the drawings, the thicknesses of layers and/or regions may be exaggerated for clarity. Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

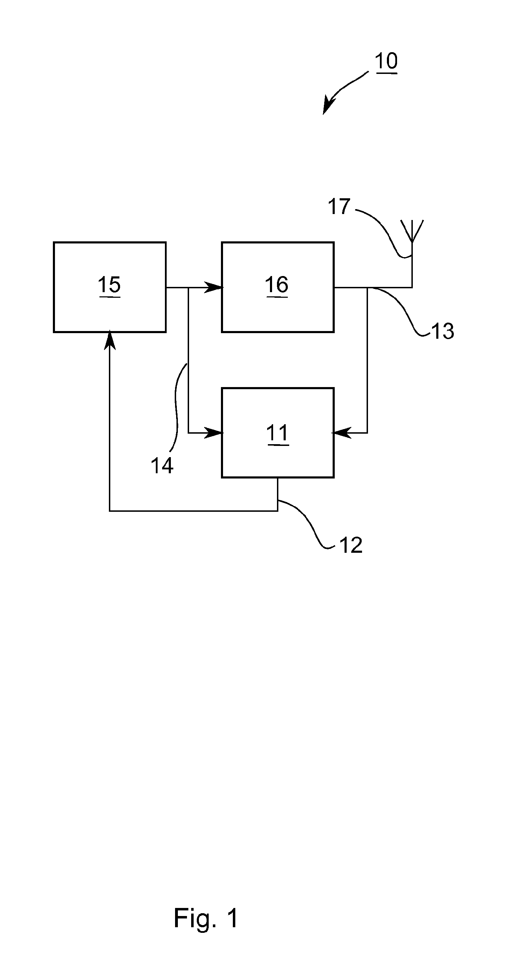

Fig. 1 schematically shows a block diagram of an exemplary transmitter apparatus 10 according to an embodiment.

The transmitter apparatus 10 comprises an extractor 11 adapted to extract or determine information 12 indicative of a transmit noise of a physical (i.e. a real-world) transmit signal 13, wherein the transmit noise denotes a deviation of the physical transmit signal 13 from an ideal transmit signal 14 or an ideal transmit signal constellation. The transmitter apparatus 10 further comprises means 15, 16, 17 for transmitting the extracted information 12 (along with other information bearing signals) to a receiver apparatus (not shown in Fig. 1) associated to the transmitter apparatus 10 for further processing said Tx noise information 12 at the receiver apparatus. The means 15, 16, 17 for transmitting may be interpreted as a transmitter device which may comprise a digital Tx baseband processor 15, Tx RF circuitry 16, and at least one transmit antenna 17 coupled to an output of the RF circuitry 16 carrying the physical (non-ideal) transmit signal 13.

The ideal transmit signal 14 may, e.g., comprise signal constellation points of a digital baseband transmit signal being fed to an input of the transmit RF chain 16 from an output of the digital baseband signal processor 15. Within the RF chain 16 quadrature components of the digital input signal 14 may be passed through digital-to-analog converters (DACs), various analog and/or digital filters, power-amplifiers, mixers, etc., until the non-ideal (noisy) physical (RF) transmit signal 13 is obtained at the output of the transmit RF chain 16. The transmit RF chain 16 introduces Tx noise comprising carrier-frequency and sampling-rate offset, phase-noise, IQ-imbalance, and amplifier nonlinearities to the ideal transmit signal constellation. Although the impact of Tx noise may be partially compensated at the transmitter apparatus 10 by means of calibration or pre-distortion mechanisms, for practical scenarios, a certain amount of distortion typically remains unaccounted for.

The extractor 11 may be adapted to extract or determine one or more statistical properties of the Tx noise as the information 12 indicative of the Tx noise in the non-ideal transmit signal 13. Such statistical properties may in general be first, second or even higher order statistics that may be used by signal detection algorithms at the receiver side. An example for a second order statistical value is the variance $\sigma_t^2$ of the Tx noise determined at the transmitter side. In case of i.i.d. circularly symmetric complex Gaussian (CSCG) distributed Tx noise (which is a reasonable assumption, according to Studer et al.), a Tx path's EVM directly corresponds to the Tx path's variance $\sigma_t^2$ of the corresponding Tx noise in case $\mathbb{E}[\|\mathbf{s}\|^2] = 1$. Hence, the extractor 11 may be adapted to extract information 12 indicative of an error vector magnitude (EVM) as the information indicative of the Tx noise.

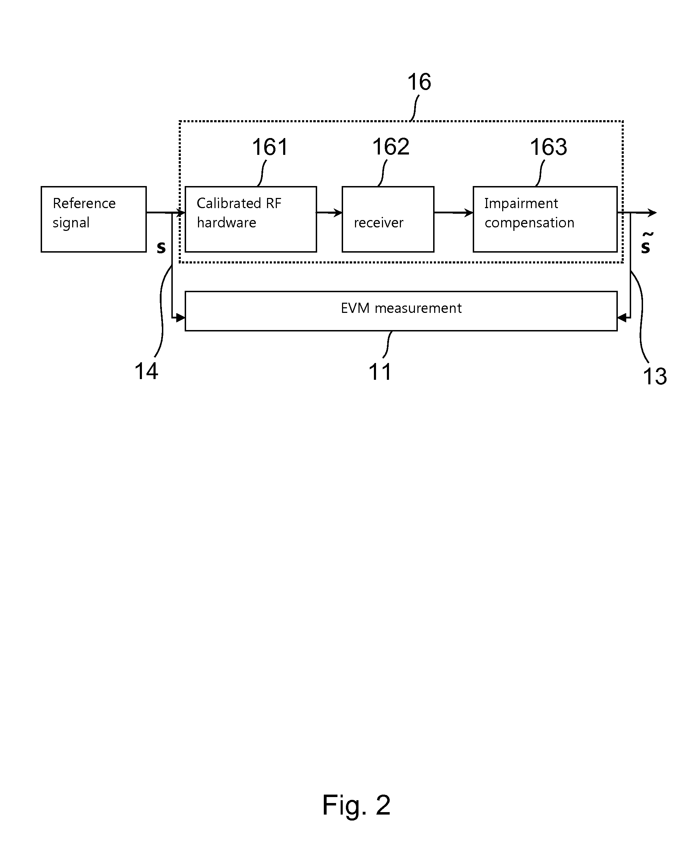

This is schematically depicted in Fig. 2, which details an EVM measurement performed at the transmitter apparatus 10.

On the one hand, the ideal transmit signal 14 either in form of a scalar or a vector s is fed into the extractor 11 as a reference. On the other hand the noisy transmit signal 13

$$\tilde{\mathbf{s}} = \mathbf{s} + \mathbf{n}_t, \quad \mathbf{n}_t \sim \mathcal{CN}\left(0, \sigma_t^2 \mathbf{I}_{M_T}\right), \tag{3}$$

impaired by the RF chain 16 is fed to the extractor 11. In the RF-literature, residual Tx-RF impairments are routinely expressed in terms of the error-vector magnitude (EVM), which is defined as a lump-sum measure that characterizes the quality of the transmitted signal. Formally, the EVM is defined as

$$\text{EVM} = \frac{\mathbb{E}\left[\|\tilde{\mathbf{s}} - \mathbf{s}\|^2\right]}{\mathbb{E}\left[\|\mathbf{s}\|^2\right]}, \tag{4}$$

which corresponds to $\sigma_t^2$ in case of i.i.d. CSCG distributed Tx noise and $E[\|\mathbf{s}\|^2] = 1$. As indicated in Fig. 2, the EVM is typically measured after calibration (block 161) of the RF-chain 16 and after compensation of those impairments (block 163) for which robust models and corresponding practical compensation algorithms exist. The "receiver" block 162 performs the appropriate inverse RF operations (compared to 161) required to do the measurements for impairment compensation (in 163). This may include attenuators, filters, mixers, analog-digital converters etc. The impairment compensation can be done in the baseband, but could also be done on an intermediate frequency (IF). In the latter case, for the EVM-measurement in 11 mixing/up-conversion and appropriate filtering of the reference signal 14 is required for the appropriate comparison with the signal 13.

Typical EVM-values can be obtained from the minimum EVM requirements specified in established standards and from publications of state-of-the art implementations. For example, IEEE 802.11n specifies -28 dB EVM for 64-QAM modulation and corresponding RF-chain implementations are reported to currently achieve EVMs ranging from -22 dB to -32 dB (depending on the output power).

In case of non i.i.d. CSCG distributed Tx noise also alternative or additional information 12 indicative of the Tx noise, such as, e.g., the covariance matrix of the Tx noise vector $\mathbf{n_t}$ may be computed at the transmitter side and forwarded to the receiver apparatus for further processing.

Using the knowledge from the transmitter impairment compensation, individual Tx noise information samples may be averaged over a desired time window and subsequently be fed forward to the receiver apparatus. That is, the extractor 11 may be adapted to average instantaneous information samples $\|\tilde{\mathbf{s}} - \mathbf{s}\|^2$ indicative of the Tx noise, and alternatively or additionally instantaneous information samples $\|\mathbf{s}\|^2$, over a predefined time period to obtain an estimate of an expected value of the respective information. This basically corresponds to a low-pass filtering process of the respective instantaneous values. Extractor 11 may also compute a Tx noise covariance matrix (e.g. in case there are significant correlations of the Tx noise in time / frequency / space / code).

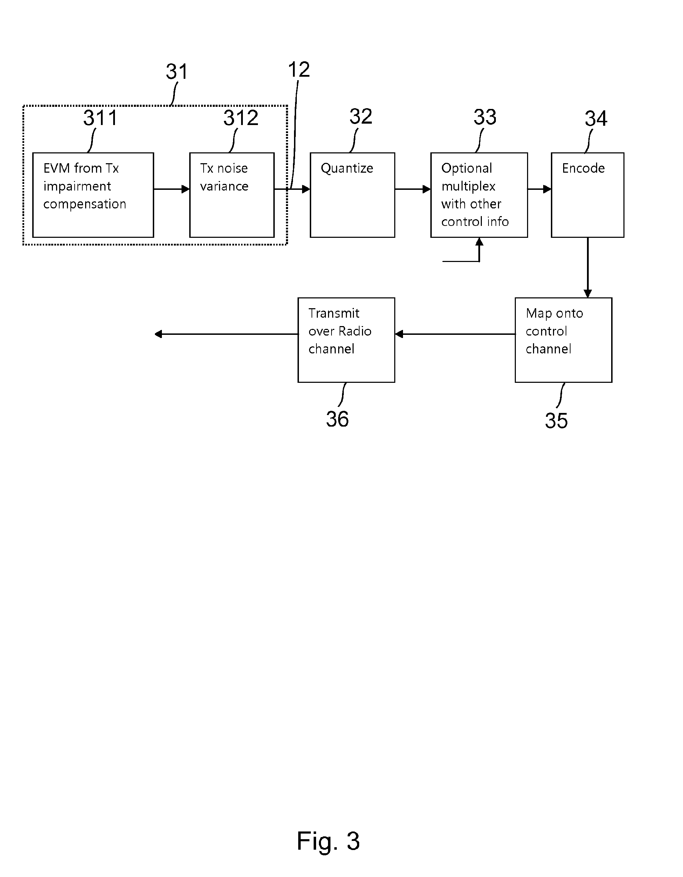

Fig. 3 shows a more detailed block diagram of a transmit method performed at a transmitter apparatus 10 according to an embodiment.

After a step 31 of extracting the information 12 indicative of the Tx noise of the physical transmit signal 13, wherein the step 31 may comprise a sub-step 311 of EVM measurement and a sub-step 312 of Tx noise variance computation (optionally also a covariance matrix computation), the resulting statistical information 12 may be quantized in a quantization step 32. In other words, the transmitter means 15, 16, 17 may be adapted to quantize the extracted information 12 prior to its transmission to the receiver apparatus. The quantization 32 may be done in a logarithmical scale, for example. In case of a matrix or vector-valued Tx noise information, e.g. covariance matrix, a codebook index and a scaling factor could be used here.

The quantized information bits may then be multiplexed with other control information in an optional step 33, in order to increase a block length for a subsequent encoding in step 34. The transmitter 15, 16, 17 may hence be adapted to multiplex the extracted transmit noise information 12 with other control signaling information to obtain a multiplexed control signal.

After encoding 34 the quantized and multiplexed Tx noise information (with e.g. block codes or convolutional codes), the Tx noise information 12 may be mapped onto a per-user downlink or uplink control channel in step 35.

Optionally the Tx noise information 12 may be included into a downlink broadcast channel of the wireless communication system. The transmitter 15, 16, 17 may hence be adapted to map the multiplexed control signal onto a control channel, as e.g. a physical control channel or onto a broadcast control channel of a wireless communication system, and to transmit the control channel to the receiver apparatus. In case the Tx noise is essentially the same for a plurality of receiver apparatuses associated to the transmitter apparatus 10, like it may be the case when the transmitter apparatus 10 is comprised by a base station transceiver serving a plurality of mobile stations, it is advantageous to use a common control, multicast or broadcast control channel in order to keep the signaling traffic due to Tx noise signaling as small as possible in the wireless communication network.

The extracted, quantized, multiplexed, encoded and mapped Tx noise information 12 may then be transmitted from the transmitter apparatus 10 to an associated receiver apparatus over a SISO (Single-Input Single-Output), MISO (Multiple-Input Single-Output), SIMO (Single-Input Multiple-Output) or MIMO (Multiple-Input Multiple-Output) radio channel in step 36 for further processing said Tx noise information at the receiver apparatus. For the MIMO or MISO case the transmitter apparatus 10 may hence comprise a plurality of transmit paths, each corresponding to a different transmit antenna 17, wherein the extractor 11 is adapted to extract information indicative of Tx noise for a physical transmit signal of each of the plurality of transmit paths.

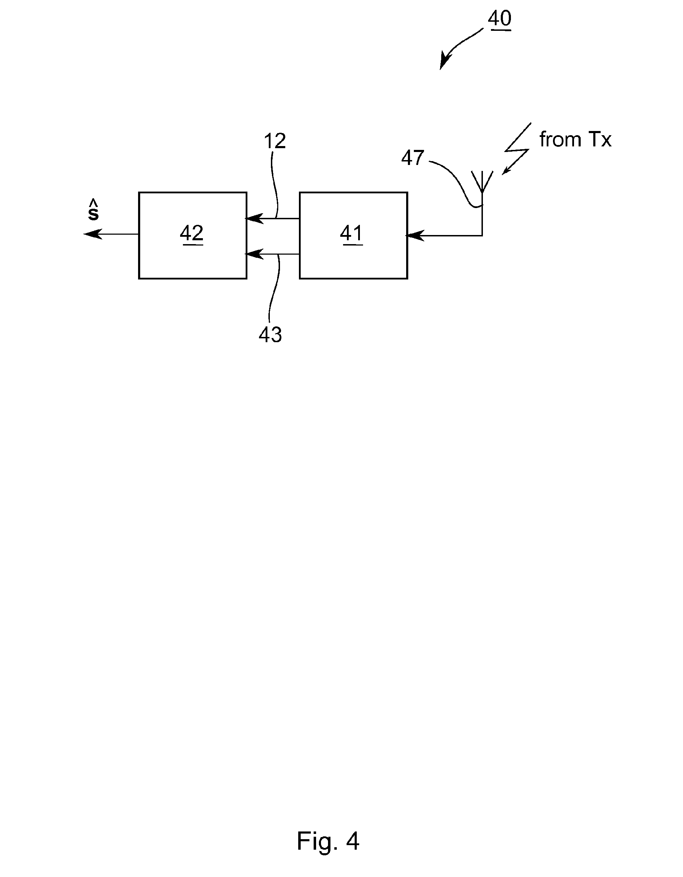

Fig. 4 schematically shows a block diagram of an exemplary receiver apparatus 40 according to an embodiment.

A receiver apparatus 40 comprises a receiver means 41 adapted to receive, from an associated transmitter apparatus 10, information 12 indicative of a transmit noise of a physical transmit signal 13, wherein the transmit noise denotes a deviation of the physical transmit signal 13 from an ideal transmit signal 14. Additionally, the receiver apparatus 40 comprises a processor or detector 42 adapted to detect, using the received information 12 indicative of the Tx noise, information symbols of the physical transmit signal 13 received by the receiver apparatus 40. Thereby the received physical transmit signal is denoted by reference sign 43 in Fig. 4. The received physical transmit signal signal 43 is typically influenced by a mobile radio channel $\mathbf{H}$ from the transmitter apparatus 10 to the receiver apparatus 40 and additive noise $\mathbf{n}_r$ at the receiver apparatus 40. Similar to the transmitter means 15, 16, 17 the receiver means 41 may comprise RF receiver front-end circuitry and, downstream thereto, digital baseband receive circuitry. The RF receiver front-end circuitry may be coupled to at least one or a plurality of receive (Rx) antennas 47 for single or multiple antenna reception.

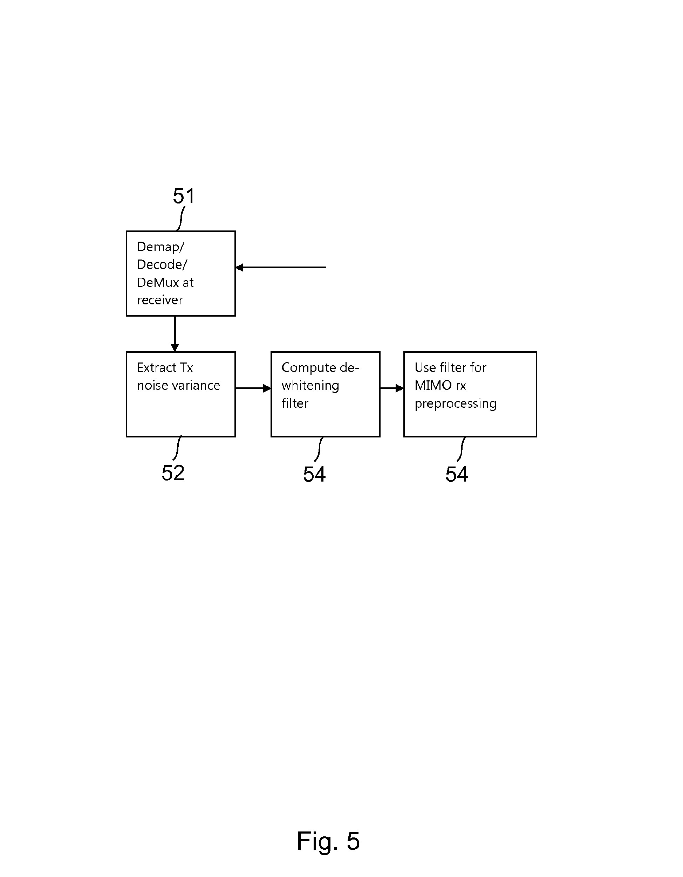

Also referring to Fig. 5, the receiver means 41 may extract the original Tx noise information 12 in a step 52 after having performed steps 51 of reversing the transmitter's mapping, encoding and multiplexing steps 35, 34, 33. Furthermore, the channel coefficients or the MIMO channel matrix $\mathbf{H}$ and the Rx noise variance $\sigma_r^2$ may be estimated at the receiver apparatus 40. Then, a whitening filter $\mathbf{W}$ may be computed e.g. according to Eq. (1) and be used for receive preprocessing. In other words, the processor 42 may comprise a whitening filter for whitening the noisy (due to the Tx noise) received signal in a spectral and/or spatial domain. This may strongly improve the performance of classical detector, in particular with respect to nonlinear detectors, such as maximum likelihood receivers. Studer et al. show a >5dB gain at a frame error rate of 10%, when the Tx noise variance is perfectly known at the receiver. The required knowledge for this at the receiver may be provided with embodiments of transmitter and/or receiver apparatuses.

In this context it is noted that embodiments also comprise a (wireless) communication system, the communication system comprising a transmitter apparatus 10, the transmitter apparatus 10 comprising an extractor 11 adapted to extract information 12 indicative of a transmit noise of a physical transmit signal 13, wherein the transmit noise denotes a deviation of the physical transmit signal 13 from an ideal transmit signal 14. The transmitter apparatus 10 further comprises transmitter means 15, 16, 17 adapted to transmit the extracted information 12 to a receiver apparatus 40 associated to the transmitter apparatus 10 for further processing said information 12 at the receiver apparatus 40. The communication system also comprises the receiver apparatus 40, which comprises receiver means 41 adapted to receive, from the associated transmitter apparatus 10, the information 12 indicative of a transmit noise of the physical transmit signal 13, wherein the transmit noise denotes a deviation of the physical transmit signal 13 from the ideal transmit signal 14. The receiver apparatus 40 further comprises a processing or detecting means 42 adapted to detect, based on the received Tx noise information 12, information symbols of the physical transmit signal 13 received by the receiver apparatus 40.

The transmitter apparatus 10 and/or the receiver apparatus 40 may comprise a signal processor executing a computer program having a program code for performing or supporting at least one of the above described method-steps when the computer program is executed on said processor. Hence, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

To summarize, embodiments may enable the possibility of proper Tx impairment compensation at a receiver. By signaling Tx noise information, such as Tx noise statistics, the difficult and inaccurate task of estimating such Tx noise properties at the receiver may be avoided or at least simplified, thus improving the receiver and, hence, the overall system performance.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### Claims

1.  A transmitter apparatus (10) comprising:

    an extractor (11) adapted to extract information (12) indicative of a transmit noise of a physical transmit signal (13), wherein the transmit noise denotes a deviation of the physical transmit signal (13) from an ideal transmit signal (14); and
    a transmitter (15; 16; 17) adapted to transmit the extracted information (12) to a receiver apparatus (40) associated to the transmitter apparatus (10) for further processing said information (12) at the receiver apparatus (40).

2.  The transmitter apparatus (10) according to claim 1, wherein the extractor (11) is adapted to extract statistical properties of the transmit noise as the information (12) indicative of the transmit noise.

3.  The transmitter apparatus (10) according to claim 1, wherein the extractor (11) is adapted to extract information indicative of an error vector magnitude (EVM) of the physical transmit signal (13) or a transmit noise variance as the information (12) indicative of the transmit noise.

4.  The transmitter apparatus (10) according to claim 1, wherein the extractor (11) is adapted to average instantaneous information samples indicative of the transmit noise over a predefined time period to obtain an estimate of an expected value of said information (12).

5.  The transmitter apparatus (10) according to claim 1, wherein the transmitter (15; 16; 17) is adapted to quantize the extracted information (12) prior to its transmission.

6.  The transmitter apparatus (10) according to claim 1, wherein the transmitter (15; 16; 17) is adapted to multiplex the extracted transmit noise information (12) with other control signaling information to obtain a multiplexed control signal.

7. The transmitter apparatus (10) according to claim 6, wherein the transmitter (15; 16; 17) is adapted to map the multiplexed control signal onto a dedicated or broadcast control channel of a wireless communication system and to transmit the dedicated or broadcast control channel to the receiver apparatus (40).

8. The transmitter apparatus (10) according to claim 1, comprising a plurality of transmit paths, each to a different transmit antenna (17), wherein the extractor (11) is adapted to extract information (12) indicative of transmit noise for a physical transmit signal (13) of each of the plurality of transmit paths.

9. A transmit method for a communication system, the method comprising:

   extracting (31), at a transmitter apparatus (10), information indicative of a transmit noise of a physical transmit signal (13), wherein the transmit noise denotes a deviation of the physical transmit signal (13) from an ideal transmit signal (14); and
   transmitting (36) the extracted information (12) to a receiver apparatus (40) associated to the transmitter apparatus (10) for further processing said information (12) at the receiver apparatus (40).

10. A receiver apparatus (40) comprising:

   a receiver (41) adapted to receive, from an associated transmitter apparatus (10), information (12) indicative of a transmit noise of a physical transmit signal (13), wherein the transmit noise denotes a deviation of the physical transmit signal (13) from an ideal transmit signal (14); and
   a detector (42) adapted to detect, based on the received information (12) indicative of the transmit noise, information symbols of the physical transmit signal (13) received by the receiver apparatus (40).

11. The receiver apparatus (40) according to claim 10, wherein the detector (42) comprises a whitening filter for whitening the transmit noise in a frequency and/or spatial domain.

12. The receiver apparatus (40) according to claim 10, wherein the information (12) is indicative of transmit noise of a plurality of physical transmit signals (13), wherein the plurality of physical transmit signals is transmitted to the receiver apparatus (40) from the associated transmitter apparatus (10) via corresponding number of transmit antennas (17).

13. A receive method for a communication system, the method comprising:

   receiving (51; 52), from an associated transmitter apparatus (10), information (12) indicative of a transmit noise of a physical transmit signal (13), wherein the transmit noise denotes a deviation of the physical transmit signal (13) from an ideal transmit signal (14); and
   detecting (53; 54), based on the received information (12) indicative of the transmit noise, information symbols of the physical transmit signal (13) received by the receiver apparatus (40).

14. A communication system, comprising:

   a transmitter apparatus (10) comprising

      an extractor (11) adapted to extract information (12) indicative of a transmit noise of a physical transmit signal (13), wherein the transmit noise denotes a deviation of the physical transmit signal (13) from an ideal transmit signal (14);
      a transmitter (15; 16; 17) adapted to transmit the extracted information (12) to a receiver apparatus (40) associated to the transmitter apparatus (10) for further processing said information (12) at the receiver apparatus (40); and

   the receiver apparatus (40) comprising

      a receiver (41) adapted to receive, from the associated transmitter apparatus (10), the information (12) indicative of the transmit noise of the physical transmit signal (13); and
      a detector (42) adapted to detect, based on the received information (12) indicative of the transmit noise, information symbols of the physical transmit signal (13) received by the receiver apparatus (40).

**15.** A computer program having a program code for performing the steps of the method of claims 9 or 13, when the computer program is executed on a computer or processor.

Fig. 1

16

161           162           163

| Reference signal | | Calibrated RF hardware | | receiver | | Impairment compensation | |

s

s̃

| EVM measurement |

14            11            13

Fig. 2

Fig. 3

Fig. 4

51

Demap/
Decode/
DeMux at
receiver

Extract Tx
noise variance

52

Compute de-
whitening
filter

54

Use filter for
MIMO rx
preprocessing

54

Fig. 5

**EUROPEAN SEARCH REPORT**

Application Number

EP 11 30 5666

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X,D | CHRISTOPH STUDER ET AL: "MIMO transmission with residual transmit-RF impairments", SMART ANTENNAS (WSA), 2010 INTERNATIONAL ITG WORKSHOP ON, IEEE, PISCATAWAY, NJ, USA, 23 February 2010 (2010-02-23), pages 189-196, XP031663708, ISBN: 978-1-4244-6070-0 * section I, first two paragraphs; paragraph bridging the two columns in page 190 and section V * | 1-15 | INV. H04L1/20 H04L27/36 |
| X | JOSE GONZALEZ-COMA ET AL: "Impact of transmit impairments on multiuser MIMO non-linear transceivers", SMART ANTENNAS (WSA), 2011 INTERNATIONAL ITG WORKSHOP ON, IEEE, 24 February 2011 (2011-02-24), pages 1-8, XP031936263, DOI: 10.1109/WSA.2011.5741944 ISBN: 978-1-61284-075-8 * sections II and III * | 1-15 | |
| | | | **TECHNICAL FIELDS SEARCHED (IPC)** |
| A | US 7 519 383 B2 (OLGAARD CHRISTIAN [US]) 14 April 2009 (2009-04-14) * column 2, lines 11-16 * * page 4, line 17 - page 5, line 18 * | 1-15 | H04L |
| | -/-- | | |

The present search report has been drawn up for all claims

| Place of search | Date of completion of the search | Examiner |
|---|---|---|
| Munich | 27 October 2011 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 30 5666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUIFENG LIU ET AL: "EVM estimation by analyzing transmitter imperfections mathematically and graphically", ANALOG INTEGRATED CIRCUITS AND SIGNAL PROCESSING, KLUWER ACADEMIC PUBLISHERS, BO, vol. 48, no. 3, 11 May 2006 (2006-05-11), pages 257-262, XP019390197, ISSN: 1573-1979, DOI: 10.1007/S10470-006-7701-0 * section 1 and 7 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 27 October 2011 | Agudo Cortada, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .......................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 30 5666

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2011

| Patent document cited in search report | | Publication date | Patent family member(s) | | Publication date |
|---|---|---|---|---|---|
| US 7519383 | B2 | 14-04-2009 | US | 2007009021 A1 | 11-01-2007 |
| | | | WO | 2007005505 A2 | 11-01-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- MIMO transmission with residual transmit-RF impairments. **C. STUDER ; M. WENK ; A. BURG.** Proceedings of the International ITGWorkshop on Smart Antennas (WSA '10). February 2010, 189-196
- **T. SCHENK ; X.-J. TAO ; P. SMULDERS ; E. FLEDDERUS.** Influence and suppression of phase noise in multi-antenna OFDM. *Proc. IEEE VTC 2004-Fall,* September 2004, vol. 2, 1443-1447
- **H. SUZUKI ; T. TRAN ; I. COLLINGS ; G. DANIELS ; M. HEDLEY.** Transmitter noise effect on the performance of a MIMO-OFDM hardware implementation achieving improved coverage. *IEEE Journal on Sel. Areas in Comm.,* August 2008, vol. 26 (6), 867-876